# EUROPÄISCHE PATENTSCHRIFT

(11) **EP 3 418 465 B1**
(45) Veröffentlichungstag und Bekanntmachung des Hinweises auf die Patenterteilung: **04.05.2022**
(21) Anmeldenummer: 17177675.0
(22) Anmeldetag: 23.06.2017
(51) Int. Cl.: E04C 5/08, E04G 21/12, E04C 5/12, E04C 5/07

(54) **VERFAHREN ZUR HERSTELLUNG EINES TEXTILBEWEHRTEN BAUSTOFF-BAUTEILS UND VERWENDUNG EINER SPANNVORRICHTUNG HIERFÜR**
METHOD FOR PRODUCING A TEXTILE REINFORCED BUILDING MATERIAL COMPONENT AND USE OF A CLAMPING DEVICE FOR SAME
PROCÉDÉ DE FABRICATION D'UN ÉLÉMENT CONSTITUTIF EN BÉTON ARMÉ EN TEXTILE ET UTLILISATION D'UN DISPOSITIF DE SERRAGE ASSOCIÉ

(43) Veröffentlichungstag der Anmeldung: 26.12.2018
(73) Patentinhaber: Solidian GmbH, 72458 Albstadt (DE)
(72) Erfinder: Pfaff, Johann, 72474 Winterlingen (DE)
(74) Vertreter: Rüger Abel Patentanwälte PartGmbB

(56) Entgegenhaltungen:
- WO-A1-2013/113442
- CN-U- 202 164 745
- KR-A- 20040 079 129

## Beschreibung

Die Erfindung betrifft ein Verfahren zur Herstellung eines mit einer Textilbewehrung versehenen Bauprodukt- oder Baustoff-Bauteils für den Hoch- oder Tiefbau sowie die Verwendung einer Spannvorrichtung zum Aufbringen einer Zugkraft auf die Textilbewehrung bei der Herstellung des Bauteils. Bei dem Bauprodukt- oder Baustoff-Bauteil kann es sich um ein Betonbauteil, ein Zementbauteil, ein Mörtelbauteil oder ein anderes eine Matrix aus einem Baustoff oder Bauprodukt aufweisenden Baustoff-Bauteil handeln.

WO 2014/040653 A1 beschreibt ein Verfahren zur Herstellung eines Betonbauteils. Ein Armierungselement weist eine Vielzahl von Fasern auf. Die Fasern sind durch Halteelemente gehalten und können mittels der Halteelemente in Faserlängsrichtung gespannt werden. Bei den Fasern kann es sich um Karbon-Rovings handeln. Das Spannen von Rovings zum Einbetten in eine Betonmatrix eines Betonbauteils ist auch aus der Dissertation "Vorgespannter textilbewehrter Beton", Markus Krüger, Universität Stuttgart, 2004 bekannt.

EP 1 186 730 A1 offenbart eine Bewehrung aus einer Flachbandlamelle mit einer Mehrzahl von Tragfasern. Um die Flachbandlamelle mit einer Vorspannung an einem Bauteil befestigen zu können, ist eine Ankerlasche vorhanden, die an dem Bauteil verankerbar ist. Unter Aufrechterhaltung der Zugspannung wird die Flachbandlamelle an dem Bauteil festgeklebt.

In DE 10 2004 033 015 A1 ist eine Spannhalterung für Verstärkungsstäbe mit kreisrundem Querschnitt beschrieben. An einer Innenkonusfläche stützen sich Klemmbacken ab, die wiederum eine Klemmkraft in Radialrichtung auf den Verstärkungsstab ausüben. In einem hydraulisch gespannten Zustand werden die Verstärkungsstäbe in eine Betonmatrix eingegossen.

Bei dem aus DE 10 2005 038 541 A1 bekannten Verfahren, werden Flächentragwerkelemente mit einer textilen Bewehrung hergestellt. Durch das ausgehärtete Betonbauteil verlaufen rohrförmige Hohlräume. Durch diesen Hohlraum wird ein Zugglied geführt, das gegen den ausgehärteten Beton auf Zug gespannt wird. Anschließend wird der verbleibende Hohlraum um das Zugglied herum mit Epoxidharz verpresst. Diese Betonbauteile können auch die Form eines Paraboloids oder Hyperboloids aufweisen.

Eine Textilbewehrung vorzuspannen und in vorgespanntem Zustand an einem Bauteil anzuordnen ist bekannt. Bei plattenförmigen Bauteilen ist ein solches Verfahren ohne übermäßigen Aufwand möglich. Schwierig ist es, wenn beliebig geformte, dreidimensionale Betonbauteile hergestellt werden sollen. DE 10 2005 038 541 A1 schlägt hierzu vor, zunächst Rohre in das Betonbauteil einzubringen und anschließend den Beton aushärten zu lassen. Erst nach dem Aushärten des Betons werden dann einzelne Zugelemente in die Rohre eingelegt, vorgespannt und schließlich durch Epoxidharz ein Verbund mit den Rohren hergestellt. Dieses Verfahren ist sehr aufwendig.

KR 2004-0079129 A beschreibt eine Spannvorrichtung zum Spannen von bandförmigen mit Epoxidharz getränkten Bewehrungselementen. Hierfür weist die Spannvorrichtung mehrere Klemmeinheiten mit jeweils zwei keilförmigen Klemmeinsatzkörpern auf. Jeder Klemmeinsatzkörper hat eine an der bandförmigen Bewehrung anliegende Klemmfläche. Die Klemmflächen sollen uneben sein, um die Reibung mit dem dazwischen eingeklemmten bandförmigen Bewehrungselement zu erhöhen.

WO 2013/113442 A1 beschreibt ein Verstärkungssystem für Bauwerke mit wenigstens einem Zugkräfte aufnehmenden Zugabschnitt und wenigstens zwei Verankerungsabschnitten zum Verankern des Zugabschnitts an einem zu verstärkenden Bauwerk. Dadurch soll es möglich sein, die Tragfähigkeit eines Bauwerks zu erhöhen oder wiederherzustellen. Das Verstärkungssystem kann aus einem faserverstärkten Kunststoff bestehen. Die Verankerungsabschnitte sind an entgegengesetzten Enden des Zugabschnitts vorhanden und jeweils durch zwei mit dem Zugabschnitt unlösbar verklebte Ankerkörper gebildet. Die Ankerkörper und der Zugabschnitt werden von einem Durchgangsloch durchsetzt, um den Verankerungsabschnitt am Bauwerk anbringen zu können, beispielsweise mittels eines Ankerbolzens.

Außerdem ist eine Textilbewehrung, insbesondere wenn sie harzgetränkte Rovings aufweist, sehr empfindlich gegen zu große radiale Klemmkräfte, die zur Erzeugung einer Vorspannung benötigt werden. Die Textilbewehrung kann beschädigt werden, so dass sich keine definierte Zugkraft bzw. Vorspannkraft aufrechterhalten lässt. Es ist daher eine Aufgabe der vorliegenden Erfindung, ein verbessertes Herstellungsverfahren und eine verbesserte Spannvorrichtung zu schaffen, die bei der Herstellung eines Baustoff-Bauteils verwendet werden kann.

Diese Aufgabe wird durch ein Verfahren mit den Merkmalen des Patentanspruches 1 sowie die Verwendung einer Spannvorrichtung mit den Merkmalen des Patentanspruches 15 gelöst.

Bei dem Verfahren wird zunächst eine Schalung mit wenigstens einem Schalungsteil bereitgestellt. Die Schalung kann beispielsweise aus zwei Schalungsteilen bestehen, die ähnlich einer Gießform geschlossen werden können, so dass der begrenzte Schalungsinnenraum die Form des herzustellenden Baustoff-Bauteils definiert. Da der Baustoff beim Aushärten nicht unter Druck steht, kann der Schalungsinnenraum nach oben offen sein.

In die Schalung werden Abstandhaltekörper eingelegt. Die Abstandhaltekörper bestehen vorzugsweise aus dem Baustoff, der auch für das Baustoff-Bauteil verwendet wird, beispielsweise Beton oder Mörtel. Die Zusammensetzung des Baustoffs oder Bauprodukts der Abstandhaltekörper kann vorzugsweise der Zusammensetzung des Baustoffs oder Bauprodukts des herzustellenden Baustoff-Bauteils entsprechen. Die Abstandhaltekörper können auch aus Kunststoff bestehen. Die Abstandhaltekörper verbleiben in dem hergestellten Baustoff-Bauteil.

Eine Textilbewehrung weist wenigstens einen Textilstrang auf, der beispielsweise durch ein Roving gebildet sein kann. Die Textilbewehrung kann, wenn sie an den Abstandhaltekörpern angeordnet wird, bereits mit einem insbesondere duromeren Harz getränkt und ausgehärtet sein oder mit einem insbesondere duromeren Harz getränkt, aber noch nicht vollständig ausgehärtet sein oder mit einer reversible quervernetzten Kunststoffmaterial getränkt und ausgehärtet sein, dessen Form sich durch Biegen bzw. Umformen anpassen lässt. Die Textilbewehrung erhält eine Form oder Gestalt auf, die in einem ausgehärtetem Zustand, in dem die Textilbewehrung in das Baustoff-Bauteil eingebettet werden soll, angepasst ist an die Form des herzustellenden Baustoff-Bauteils. Die Textilbewehrung wird an den Abstandhaltekörpern angeordnet. Über die Abstandhaltekörper wird die Position der Textilbewehrung innerhalb der Schalung und somit innerhalb des herzustellenden Baustoff-Bauteils definiert.

Die Textilbewehrung wird nach dem Anordnen an den Abstandhaltekörpern in zumindest einer Richtung, in der sich der wenigstens eine Textilstrang erstreckt, mit einer Zugkraft beaufschlagt. Der wenigstens eine Textilstrang erstreckt sich dabei nicht geradlinig, sondern kann in wenigstens einem Bereich gekrümmt bzw. gebogen sein. Quer zur Erstreckungsrichtung des mit der Zugkraft beaufschlagten Textilstrangs stützt sich der wenigstens eine Textilstrang der Textilbewehrung über die Abstandhaltekörper an der Schalung bzw. zumindest einem Schalungsteil der Schalung ab. Die Position der Textilbewehrung innerhalb der Schalung bzw. des Schalungsinnenraums ist somit definiert. Anschließend wird fließfähiger Baustoff, wie z.B. Beton oder Mörtel in den Schalungsinnenraum eingefüllt und ausgehärtet. Beim Aushärten des Baustoffs wird die Zugkraft auf die Textilbewehrung aufrechterhalten. Schließlich kann das ausgehärtete Baustoff-Bauteil ausgeschalt werden, d.h. aus der Schalung entnommen werden.

Durch das Verwenden von Abstandhaltekörpern kann die Position der Textilbewehrung innerhalb des herzustellenden Bauteils auch für das erfindungsgemäß herzustellende Baustoff-Bauteil vorgegeben werden, das eine beliebige dreidimensionale Gestalt aufweist und in eine oder mehrere Raumrichtungen konkav oder konvex gekrümmt ist. Die Verstärkung des Baustoff-Bauteils mit der Textilbewehrung kann somit innerhalb des Baustoff-Bauteils an der gewünschten Stelle bzw. im gewünschten Bereich erfolgen. Mit diesem Verfahren lassen sich prinzipiell beliebig komplexe dreidimensionale Formen des Baustoff-Bauteils herstellen, die eine oder mehrere konkav und/oder konvex gekrümmte Flächen haben. Dennoch kann die Textilbewehrung unmittelbar in die Baustoffmatrix eingebettet werden und sich in vorgespanntem Zustand mit der Baustoffmatrix verbinden, wenn diese aushärtet.

Es ist vorteilhaft, wenn die Abstandhaltekörper mit einer Unterseite auf ein unteres Schalungsteil gelegt werden. Bei dieser Ausführungsform können die Abstandhaltekörper durch die Schwerkraft in der Schalung positioniert werden, insbesondere ohne zusätzliche Fixierung. Es ist alternativ auch möglich, einen oder mehrere der Abstandhaltekörper durch ein Fixierungsmittel an der gewünschten Stelle in der Schalung zu befestigen, bevor die Textilbewehrung auf den Abstandhaltekörpern angeordnet und mit einer Zugkraft gespannt wird.

Bei einem bevorzugten Ausführungsbeispiel haben die Abstandhaltekörper eine Oberseite, die in wenigstens einer Krümmungsrichtung konvex gekrümmt ist. Insbesondere besteht an der Oberseite Kontakt zwischen dem betreffenden Abstandhaltekörper und einem zugeordneten Abschnitt des wenigstens einen Textilstrangs. Die Krümmungsrichtung entspricht der Erstreckungsrichtung des mit der Zugkraft beaufschlagten wenigstens einen Textilstrangs der Textilbewehrung. Durch die gekrümmte Form der Oberseite wird der unter Zug stehende Textilstrang der Textilbewehrung bzw. das Roving nicht beschädigt. Die Krümmung der Oberseite in Krümmungsrichtung kann zumindest an einer oder mehreren Stellen einen größeren Betrag aufweisen als die Krümmung des sich darauf abstützenden wenigstens einen Textilstrangs.

Bei dieser Ausführung kann es auch vorteilhaft sein, wenn die Oberseite quer zu der Krümmungsrichtung - d.h. quer zu der Erstreckungsrichtung des wenigstens einen Textilstrangs - eine Vertiefung oder Rinne bildet und insbesondere konkav gekrümmt ist, um den wenigstens einen Textilstrang abzustützen.

Es ist vorteilhaft, wenn mehrere der Abstandhaltekörper mit einem biegbaren oder flexiblen Verbindungselement miteinander verbunden sind. Beispielsweise können mehrere Abstandhaltekörper an einem gemeinsamen Verbindungselement mit Abstand zueinander angeordnet sein und eine Kette bilden. Eine derartige Kette lässt sich auch allein durch die Gewichtskraft selbst dann auf einem unteren Schalungsteil anordnen, wenn das untere Schalungsteil entlang der Kette nicht überall horizontal ausgerichtet ist und z.B. eine konvex gekrümmte Form aufweist.

Es ist bevorzugt, wenn die Abstandhaltekörper mehrere Gruppen bilden, beispielsweise mehrere der vorstehend erläuterten Ketten. Die Abstandhaltekörper einer gemeinsamen Gruppe sind über ein biegbares oder flexibles Verbindungselement miteinander verbunden. Es können somit mehrere Ketten von jeweils mehreren Abstandhaltekörpern vorhanden sein. Die Anzahl der Abstandhaltekörper pro Gruppe bzw. pro Kette kann variieren.

Abhängig von der herzustellenden Form des Baustoff-Bauteils können wenigstens zwei der vorhandenen Abstandhaltekörper unterschiedliche Größen und/oder Konturen aufweisen. Bevorzugt sind sämtliche Abstandhaltekörper identisch, so dass deren Herstellung vereinfacht ist.

Bei einem Ausführungsbeispiel des Verfahrens kann die Schalung dadurch hergestellt werden, dass zunächst ein naturgetreues Modell des herzustellenden Baustoff-Bauteils hergestellt wird. Anhand dieses Modells wird anschließend eine Negativform mit zwei oder mehr als zwei Schalungsteilen hergestellt, die als Schalung verwendet wird.

Die Textilbewehrung ist bevorzugt durch mehrere Textilstränge gebildet. Die Textilstränge können sich kreuzen und an den Kreuzungsstellen miteinander verbunden sein. Auf diese Weise entsteht eine Gitterstruktur der Textilbewehrung. Die Textilbewehrung kann eine oder mehrere Gruppen mit jeweils wenigstens einem Textilstrang aufweisen. Die Textilstränge innerhalb einer Gruppe sind kreuzungsfrei angeordnet und können sich beispielsweise parallel zueinander erstrecken sein. Zwei unterschiedliche Gruppen können derart angeordnet sein, dass sich ihre Textilstränge kreuzen. Die Anzahl der Gruppen von Textilsträngen ist beliebig. Bei einem Ausführungsbeispiel weist eine Textilbewehrung eine oder zwei Gruppen von Textilsträngen auf.

Ein Textilstrang kann beispielsweise durch Tränken eines Rovings mit einem vorzugsweise duromeren Harz und durch Aushärten hergestellt werden. Beim Aushärten der Rovings können Textilstränge miteinander verbunden werden, wodurch beispielsweise die Gitterstruktur hergestellt werden kann.

Bei einem Ausführungsbeispiel des Verfahrens kann die Textilbewehrung in einer Gestalt oder Form ausgehärtet werden, in der die Textilbewehrung in das Baustoff-Bauteil eingegossen wird. Diese vorgeformte und ausgehärtete Textilbewehrung kann auf den Abstandhaltekörpern angeordnet und mit der Zugkraft beaufschlagt werden.

Es ist alternativ hierzu auch möglich, eine noch nicht ausgehärtete Textilbewehrung auf den Abstandhaltekörpern anzuordnen und dort in der gewünschten Form auszuhärten. Während oder nach dem Aushärten kann eine Zugkraft auf die Textilbewehrung ausgeübt werden.

Der Betrag der Zugkraft, die auf die Textilstränge einer gemeinsamen Gruppe und/oder aller Gruppen ausgeübt wird, ist vorzugsweise gleich groß. Die Zugkraft auf Textilstränge unterschiedlicher Gruppen wird bevorzugt separat erzeugt und/oder eingestellt. Die Richtung, in der die Zugkraft auf jeden Textilstrang ausgeübt wird, entspricht jeweils dessen Erstreckungs- oder Verlaufsrichtung. Daher können die Zugkräfte, die auf unterschiedliche Gruppen von Textilsträngen ausgeübt werden, die Textilbewehrung in unterschiedliche Richtungen vorspannen. Eine gitterförmige Textilbewehrung kann durch die Zugkräfte beispielsweise in zwei Richtungen vorgespannt werden.

Eine Spannvorrichtung wird zur Erzeugung der Zugkraft beim Herstellen des Baustoff-Bauteils verwendet. Die Spannvorrichtung ist dazu eingerichtet, eine Zugkraft in einer Zugrichtung auf eine Textilbewehrung auszuüben. Die Zugrichtung entspricht dabei der Erstreckungs- bzw. Verlaufsrichtung eines jeweiligen Textilstrangs der Textilbewehrung, auf den die Zugkraft ausgeübt wird. Eingeleitet wird die Zugkraft vorzugsweise an den entgegengesetzten Enden des jeweiligen Textilstrangs der Textilbewehrung.

Die Spannvorrichtung weist wenigstens eine Klemmeinheit auf, die dazu eingerichtet ist, einen Endabschnitt der Textilbewehrung mit einer Klemmkraft zu beaufschlagen. Die Klemmkraft wirkt in einer Klemmrichtung im Wesentlichen rechtwinklig zur Erstreckungsrichtung der klemmend beaufschlagten Textilstränge der Textilbewehrung. Die wenigstens eine Klemmeinheit hat zwei Klemmteile. Jedes Klemmteil weist einen Klemmeinsatzkörper auf. Jeder der Klemmeinsatzkörper hat eine Klemmfläche, die unmittelbar am zu klemmenden Endabschnitt der Textilbewehrung anliegt, wenn die Textilbewehrung in der Klemmeinheit eingeklemmt ist. Jeder Klemmeinsatzkörper bzw. zumindest die Klemmfläche jedes Klemmeinsatzkörpers besteht aus einem Kunststoffmaterial, das an der Klemmfläche eine Härte im Bereich von 55 Shore-D bis 80 Shore-D aufweist.

Es hat sich gezeigt, dass Klemmeinsatzkörper mit einer solchen Härte einerseits eine ausreichend große Klemmkraft auf den Endabschnitt der Textilbewehrung ausüben können und andererseits verhindern, dass die Textilstränge im Endabschnitt beschädigt werden. Außerdem wird erreicht, dass über die Klemmkraft zwischen den beiden Klemmteilen bzw. zwischen den beiden Klemmflächen eine sehr genaue und gleichförmige Einstellung der Zugkraft möglich ist. Je größer die Klemmkraft ist, desto größer ist die Zugkraft, mit der die Textilbewehrung beaufschlagt werden kann. Ist die Zugkraft auf einzelne Textilstränge der Textilbewehrung zu groß, ermöglicht die definierte Härte des Kunststoffmaterials der Klemmeinsatzkörper eine gleitende Relativbewegung zwischen dem betreffenden Textilstrang und dem Klemmeinsatzkörper, so dass abhängig von der erzeugten Klemmkraft zwischen den Klemmeinsatzkörpern eine gleichmäßige Zugkraft auf sämtliche der mit der Klemmkraft geklemmten Textilstränge erreicht werden kann. Dadurch ist sichergestellt, dass die Beträge der Zugkräfte auf die Textilstränge der Textilbewehrung gleich groß sind und das hergestellte Baustoff-Bauteil eine definierte Zugstabilität aufweist.

Es ist bevorzugt, wenn wenigstens einer der Klemmeinsatzkörper eine unebene Klemmfläche aufweist. Unter einer unebenen Klemmfläche ist dabei eine Klemmfläche zu verstehen, die Vorsprünge und/oder Vertiefungen aufweist, deren Dimension größer ist als die Rauheit des Kunststoffmaterials.

Bei einem bevorzugten Ausführungsbeispiel weist die wenigstens eine unebene Klemmfläche Rillen bzw. Nuten auf, die sich in einer Querrichtung quer zur Zugrichtung erstrecken. Beispielsweise kann die jeweils andere Klemmfläche der gemeinsamen Klemmeinheit eben ausgeführt sein.

Es ist vorteilhaft, wenn jedes Klemmteil einen Stützvorsprung aufweist, der sich in der Querrichtung quer zur Zugrichtung erstreckt. Der Klemmeinsatz kann sich an dem Stützvorsprung abstützen und wird gegen die Zugkraft am Klemmteil gehalten.

Es ist bevorzugt, wenn das Kunststoffmaterial der Klemmeinsatzkörper ein Polyurethanharz mit wenigstens einem Zusatzstoff bzw. Additiv aufweist. Der wenigstens eine Zusatzstoff bzw. das wenigstens eine Additiv kann beispielsweise ein Füllstoff und/oder ein Isocyanat und/oder ein Entlüfter, insbesondere ein silikonfreier Entlüfter, sein.

Bei einem Ausführungsbeispiel weist das Kunststoffmaterial 15-25 Gew.% eines Polyurethanharzes, 45-55 Gew.% eines Isocyanats, 20-35 Gew.% eines Füllstoffes, insbesondere eines Quarzsandes und 0,5-1,5 Gew.% eines silikonfreien Entlüfters, beispielsweise BYK-A535 auf.

Vorteilhafte Ausgestaltungen der Erfindung ergeben sich aus den abhängigen Patentansprüchen. Nachfolgend werden bevorzugte Ausführungsbeispiele der Erfindung anhand der beigefügten Zeichnungen im Einzelnen erläutert. Es zeigen:
Figur 1 eine schematische Darstellung mehrerer gitterförmig angeordneter Textilstränge bzw. Rovings,
Figur 2 eine schematische Seitenansicht eines Formteils zur Formgebung einer Textilbewehrung,
Figur 3 eine Querschnittsansicht des Formteils aus Figur 2 gemäß Schnittlinie III-III,
Figur 4 eine schematische Seitenansicht zur Erzeugung einer durch das Formteil vorgegebenen Gestalt der Textilbewehrung,
Figur 5 eine schematische, perspektivische Darstellung eines Modells eines herzustellenden Baustoff-Bauteils,
Figur 6 das Modell aus Figur 5 in einer Seitenansicht,
Figur 7 das Modell aus den Figuren 5 und 6 in einem Querschnitt gemäß Schnittlinie VII-VII in Figur 6,
Figur 8 eine schematische Darstellung eines Ausführungsbeispiels einer Schalung mit zwei Schalungsteilen zur Herstellung eines Baustoff-Bauteils,
Figur 9 das Anordnen mehrerer Abstandhaltekörper in der Schalung gemäß Figur 8 in schematischer Darstellung,
Figur 10 das Anordnen einer Textilbewehrung auf den Abstandhaltekörpern und das Aufbringen einer Zugkraft auf die Textilbewehrung in schematischer Darstellung,
Figur 11 das Gießen des Baustoff-Bauteils bei geschlossener Schalung in schematischer Darstellung,
Figur 12 eine schematische Seitenansicht des ausgeschalten, hergestellten Baustoff-Bauteils mit eingebetteter Textilbewehrung,
Figuren 13 bis 15 jeweils eine schematische Darstellung unterschiedlicher Ausführungsbeispiele von Abstandhaltekörpern in schematischer perspektivischer Darstellung,
Figur 16 eine schematische Querschnittsansicht eines Ausführungsbeispiels einer Klemmeinheit einer Spannvorrichtung,
Figur 17 eine schematische Darstellung eines Ausführungsbeispiels einer Spannvorrichtung mit zwei Klemmeinheiten,
Figur 18 das Aufbringen von Zugkräften in mehrere Raumrichtungen mit Hilfe von mehreren Klemmeinheiten in schematischer Darstellung.

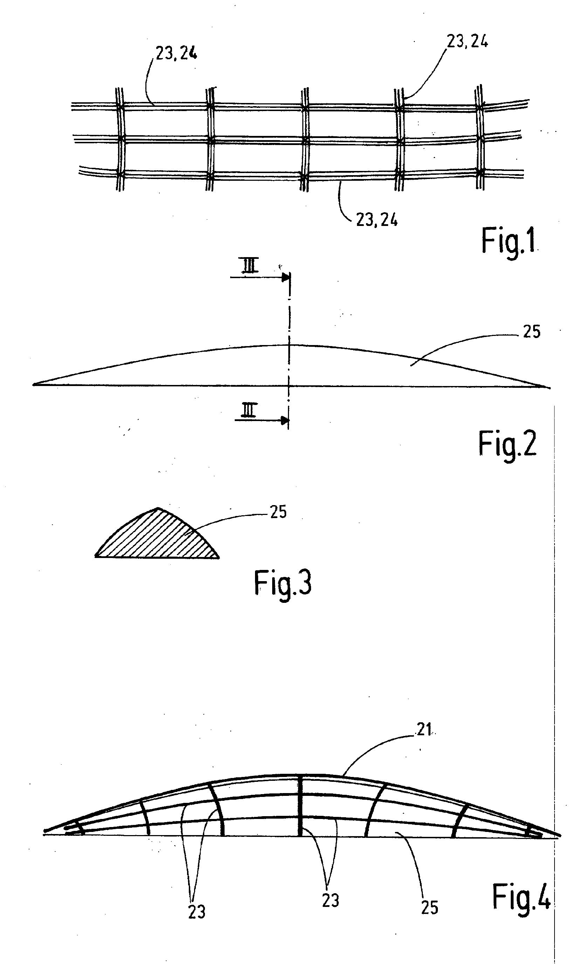

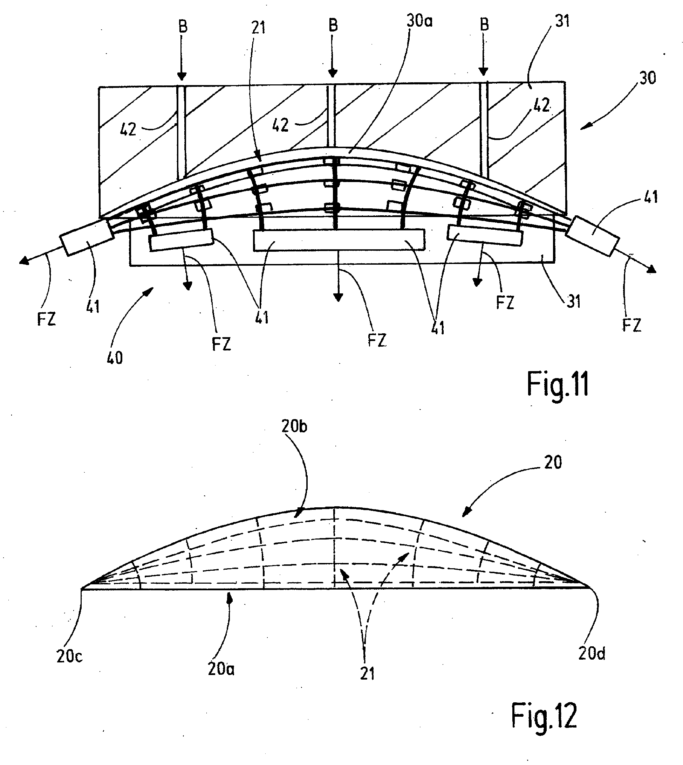

Anhand der Figuren 1-15 wird ein Verfahren zur Herstellung eines Bauprodukt- oder Baustoff-Bauteils 20 mit einer Textilbewehrung 21 (Figur 12) erläutert. Bei dem Bauprodukt- oder Baustoff-Bauteil kann es sich um ein Betonbauteil, ein Mörtelbauteil, aufweisend Zement- oder Polymer- oder Kunstharzmörtel, oder ein anderes eine Matrix aus einem Baustoff oder Bauprodukt aufweisenden Baustoff-Bauteil handeln.

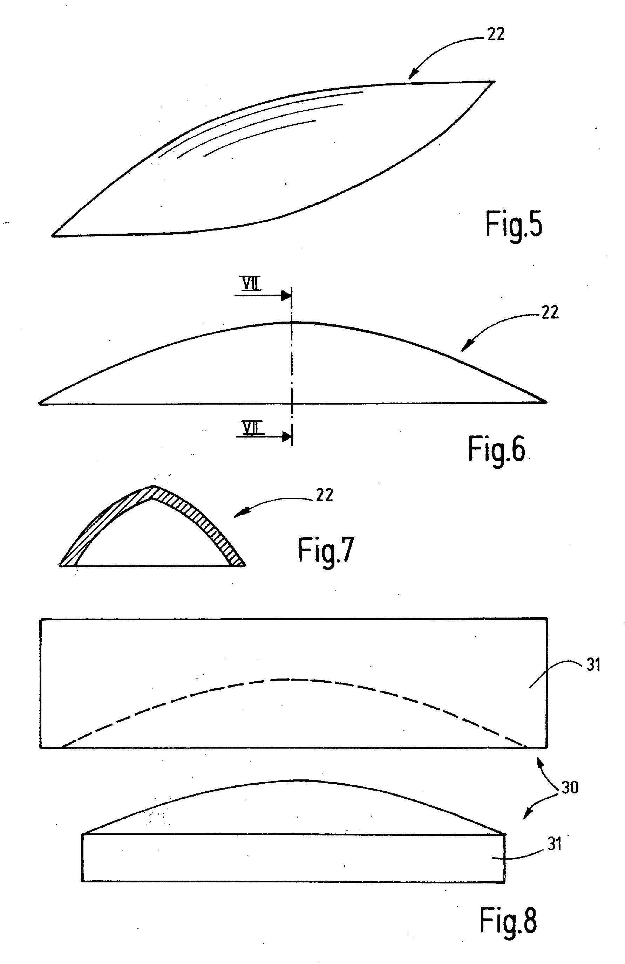

Das hergestellte Baustoff-Bauteil 20 weist eine beliebige dreidimensionale Gestalt auf und wenigstens eine konvex gekrümmte und/oder konkav gekrümmte Fläche. Bei dem hier veranschaulichten Ausführungsbeispiel wird ein Baustoff-Bauteil 20 hergestellt, dessen eine Fläche 20a sich beispielsgemäß entlang einer Ebene erstreckt, während daran anschließende Flächen 20b konvex und/oder konkav gekrümmt sind. Das Baustoff-Bauteil 20 erstreckt sich beispielsweise in einer Richtung von einem Ende 20c zu einem gegenüberliegenden Ende 20d. In der Mitte zwischen den beiden Enden 20c, 20d hat es seine größte Breite und Höhe und verjüngt sich von dort aus zu den jeweiligen Enden 20c, 20d hin. Die Form des Baustoff-Bauteils 20 ergibt sich auch anhand des Modells 22, das in den Figuren 5-7 veranschaulicht ist. Die Form des hergestellten Baustoff-Bauteils 20 ist lediglich beispielhaft. Es können beliebige andere dreidimensionale Formen mit dem beschriebenen Verfahren hergestellt werden.

Die Textilbewehrung 21 weist mehrere Textilstränge 23 auf. Jeder Textilstrang 23 kann ein Roving 24 enthalten bzw. durch ein Roving 24 gebildet sein. In Figur 1 verlaufen die Textilstränge 23 bzw. Rovings 24 einer gemeinsamen Gruppe jeweils kreuzungsfrei, beispielsweise in eine Richtung, wobei die Gruppen vorzugsweise rechtwinklig zueinander ausgerichtet sind, so dass die dargestellte Gitterstruktur entsteht. Die Textilstränge 23 bzw. Rovings 24 sind noch nicht mit einem Kunststoff bzw. einem Harz getränkt und daher noch flexibel. An den Kreuzungsstellen sind die Rovings 24 zunächst vorläufig miteinander verbunden bzw. aneinander fixiert.

Zur Herstellung einer ausgehärteten Textilbewehrung 21 in einer gewünschten dreidimensionalen Gestalt, die für das betreffende Baustoff-Bauteil 20 gewünscht ist, kann beispielsweise ein Formteil 25 verwendet werden, auf dem die noch nicht ausgehärtete Textilbewehrung 21 angeordnet und anschließend ausgehärtet wird. Beispielsweise können die Rovings 24 mit Kunststoff oder Harz getränkt, auf dem Formteil 25 angeordnet und in der dadurch vorgegebenen Form ausgehärtet werden, z.B. in einem Ofen durch Wärmeeinwirkung. Dadurch entsteht eine ausgehärtete Textilbewehrung 21, wie sie schematisch in Figur 4 veranschaulicht ist. Die Textilbewehrung 21 ist in ausgehärtetem Zustand formstabil und nicht mehr formbar, wenn es sich bei dem ausgehärteten Harz um ein Duromer handelt. Als Material für die Kunststoffmatrix der Textilstränge 23 kann Epoxidharz oder SBR (Styrol-Butadien-Kautschuk) verwendet werden.

Um das Baustoff-Bauteil 20 in der gewünschten Form gießen zu können, wird eine Schalung 30 bereit- oder hergestellt. Bei dem hier beschriebenen Ausführungsbeispiel des Verfahrens wird zur Herstellung der Schalung 30 zunächst ein Modell 22 im Maßstab 1:1 des herzustellenden Baustoff-Bauteils 20 erzeugt. Das Modell 22, dessen Form und Dimension dem herzustellenden Baustoff-Bauteil 20 entspricht, ist in den Figuren 5-7 veranschaulicht. Mittels dieses Modells 22 wird eine Negativform erzeugt, die als Schalung 30 dient (Figur 8). Die Schalung 30 weist insbesondere mehrere Schalungsteile 31 auf. Bei den hier schematisch veranschaulichten Ausführungsbeispielen werden zwei Schalungsteile 31 verwendet. Es versteht sich, dass auch mehr als zwei Schalungsteile 31 eine Schalung 30 bilden können. Die Anzahl der Schalungsteile 31 hängt insbesondere von der Komplexität der Gestalt bzw. Form des herzustellenden Baustoff-Bauteils 20 ab.

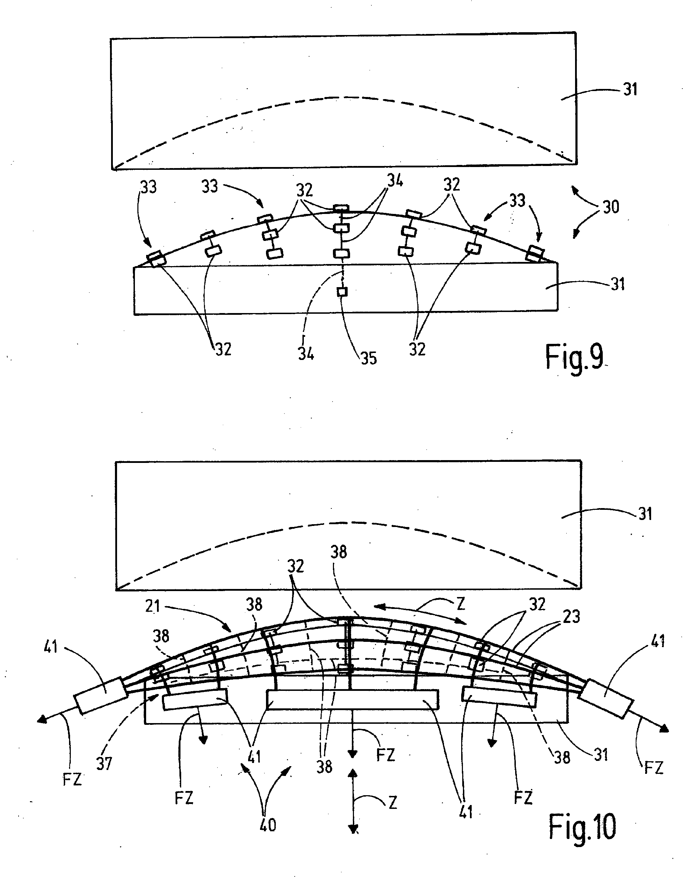

Um die Textilbewehrung 21 in der Schalung 30 an der vorgesehenen, gewünschten Position anordnen zu können, werden mehrere Abstandhaltekörper 32 in der Schalung 30 angeordnet. Die Abstandhaltekörper 32 definieren den Abstand der Textilbewehrung 21 zu wenigstens einem der Schalungsteile 31 und mithin die Position der Textilbewehrung 21 innerhalb des Baustoff-Bauteils 20, wenn der Innenraum der Schalung 30 mit dem Baustoff (Beton, Mörtel oder ein geeigneter fließfähiger und aushärtbarer Baustoff) ausgegossen wird. Die Abstandhaltekörper 32 sind in Figur 9 lediglich stark schematisiert veranschaulicht. Bevorzugt bilden mehrere Abstandhaltekörper 32 eine gemeinsame Gruppe 33. Die Anzahl der Abstandhaltekörper 32 pro Gruppe 33 kann gleich groß oder unterschiedlich groß sein. Bevorzugt sind sämtliche Abstandhaltekörper 32 einer gemeinsamen Gruppe 33 miteinander verbunden, insbesondere durch ein biegbares bzw. formbares oder flexibles Verbindungselement 34. An diesem Verbindungselement 34 können die Abstandhaltekörper 32 der Gruppe 33 aufgereiht mit Abstand zueinander angeordnet sein, so dass jede Gruppe 33 eine Kette bildet. Es versteht sich, dass jede Gruppe 33 auch mehrere separate Verbindungselemente 34 aufweisen kann, wobei sich ein Verbindungselement z.B. jeweils zwischen zwei unmittelbar benachbarten Abstandhaltekörper 32 erstreckt und diese beiden Abstandhaltekörper 32 miteinander verbindet. Es ist bevorzugt, wenn sich ein Verbindungselement 34 durch sämtliche Abstandhaltekörper 32 hindurch erstreckt, so dass ein Verbindungselement 34 pro Abstandhaltekörper-Gruppe ausreichend sein kann.

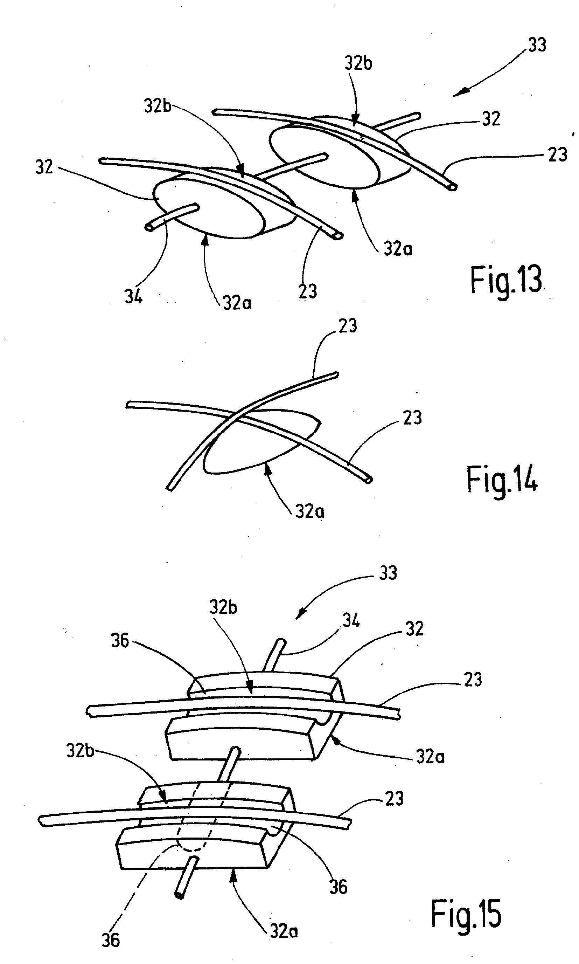

In den Figuren 13 bis 15 sind unterschiedliche, beispielhafte Ausführungsformen von Abstandhaltekörpern 32 veranschaulicht. Jeder Abstandhaltekörper 32 hat eine Unterseite 32a und eine Oberseite 32b. Mit der Unterseite 32a wird der Abstandhaltekörper 32 an einem Schalungsteil 31 der Schalung 30 angeordnet und liegt vorzugsweise unmittelbar mit der Unterseite 32a am Schalungsteil 31 an. Die der Unterseite 32a entgegengesetzter Oberseite 32b dient als Abstützfläche für einen Abschnitt bzw. einen Bereich der Textilbewehrung 21 bzw. eines oder mehrerer Textilstränge 23. Die Oberseite 32b ist vorzugsweise in wenigstens eine Richtung konvex gekrümmt und zumindest in dem Abschnitt, der als Abstützfläche dient, kantenlos und/oder stufenlos ausgeführt. Dadurch wird eine Beschädigung der Textilbewehrung 21 vermieden.

Die Oberseite 32b ist bei dem Ausführungsbeispiel in Figur 13 ist in eine einzige Raumrichtung, die als Krümmungsrichtung bezeichnet werden kann, gekrümmt. In einer Seitenansicht betrachtet hat das Ausführungsbeispiel des Abstandhaltekörpers 32 nach Figur 13 eine elipsenförmige oder elipsenähnliche Gestalt. Somit ist auch die Unterseite 32a gekrümmt. Die Auflagefläche der Unterseite 32a des Abstandhaltekörpers 32 an einer Fläche des Schalungsteils 31 ist somit reduziert. In die Schalung 30 gegossener Baustoff kann daher zwischen das Schalungsteil 31 und den Abstandhaltekörper 32 fließen und den Abstandhaltekörper 32 von allen Seiten umgeben.

Die Oberseite 32b des in Figur 14 dargestellten Ausführungsbeispiels des Abstandhaltekörpers 32 ist in zwei Krümmungsrichtungen konvex gekrümmt und beispielsweise die Form einer Kugelkalottenaußenfläche aufweisen kann. Die Unterseite 32a ist bei dem Ausführungsbeispiel des Abstandhaltekörpers 32 aus Figur 14 eben ausgeführt. Der Abstandhaltekörper 32 gemäß Figur 14 hat somit insgesamt die Form einer Kugelkalotte. Die Unterseite 32a kann alternativ hierzu auch einen anderen beliebigen Verlauf aufweisen.

Die Ausführungsbeispiele gemäß der Figuren 13 und 14 könnten auch miteinander kombiniert werden. So könnte die Unterseite 32a beim Abstandhaltekörper 32 aus Figur 13 zum Beispiel ebenfalls eben ausgeführt sein oder umgekehrt die Unterseite 32a bei dem in Figur 14 dargestellten Ausführungsbeispiel zumindest in eine Raumrichtung konvex gekrümmt sein.

In Figur 15 ist schematisch ein weiteres Ausführungsbeispiel eines Abstandhaltekörpers 32 veranschaulicht. Die in eine Richtung konvex gekrümmte Oberseite 32b ist bei diesem Ausführungsbeispiel in eine andere Richtung quer dazu konkav ausgebildet, so dass eine Rinne 36 gebildet ist, deren Grund bzw. Boden in eine Richtung konvex gekrümmt verläuft. In eine Richtung quer dazu kann ein Textilstrang 23 durch die Flanken der Rinne abgestützt bzw. geführt werden. Die Unterseite 32a dieses Abstandhaltekörpers 32 kann beispielsweise eben ausgeführt oder alternativ in wenigstens eine Raumrichtung konvex gekrümmt sein.

Wenn bei dem in Figur 15 veranschaulichten Ausführungsbeispiel des Abstandhaltekörpers 32 nicht nur ein Textilstrang 23 geführt werden soll, sondern mehrere Textilstränge 23, können entsprechend mehrere Rinnen 36 vorhanden sein. Wenn sich kreuzende Textilstränge 32 geführt werden sollen, kann zu der dargestellten und beschriebenen Rinne 36 eine weitere, sich mit der vorhandenen Rinne 36 kreuzende Rinne im Bereich der Oberseite 32b des Abstandhaltekörpers 32 vorhanden sein. Der Verlauf einer solchen weiteren Rinne 36 ist in Figur 15 schematisiert gestrichelt angedeutet.

Die Größe, Form bzw. Kontur der Abstandhaltekörper 32 kann abhängig von der Gestalt des herzustellenden Baustoff-Bauteils 20 variieren. Es können auch Abstandhaltekörper 32 mit unterschiedlichen Form bzw. Gestalten an unterschiedlichen Stellen in der Schalung 30 eingesetzt werden. Sämtliche Ausführungen der Abstandhaltekörper 32 können mit weiteren Abstandhaltekörpern 32 desselben oder eines anderen Ausführungsbeispiels gemeinsam bei der Herstellung des Baustoff-Bauteils 20 und/oder in verschiedenen oder einer gemeinsamen Abstandhaltekörper-Gruppe verwendet werden.

Die Abstandhaltekörper 32 bestehen beispielsgemäß aus einem Baustoff und haben insbesondere dieselbe Zusammensetzung wie der Baustoff, aus dem das Baustoff-Bauteil 20 besteht. Sie können alternativ auch aus einem von der Baustoffmatrix des Baustoff-Bauteils 20 verschiedenen Material hergestellt sein, beispielsweise aus einem Kunststoff, wie etwa einem Harz oder einem Polymer-Kunststoff. Die Abstandhaltekörper 32 werden, wie es nachfolgend noch erläutert wird, in das Baustoff-Bauteil 20 eingegossen. Sind die Abstandhaltekörper 32 mittels Verbindungselementen 34 miteinander verbunden, werden auch die Verbindungselemente 34 in das Baustoff-Bauteil 20 eingegossen.

Wenn die Abstandhaltekörper 32 über die Verbindungselemente 34 zu einer oder mehreren Gruppen 33 verbunden sind, können diese Gruppen ohne zusätzliche weitere Fixierung auch auf einer konvex gekrümmten Fläche eines Schalungsteils 31 angeordnet werden, wie es in Figur 9 schematisch veranschaulicht ist. Die Bildung von Gruppen 33 vereinfacht daher das Anordnen der Abstandhaltekörper 32 in der Schalung 30.

Sollte es aufgrund des herzustellenden Baustoff-Bauteils 20 nicht möglich sein, die Abstandhaltekörper 32 allein durch die Gewichtskraft an einem Schalungsteil 31 anzuordnen, können auch zusätzliche Fixiermittel eingesetzt werden, um die Abstandhaltekörper 32 in der gewünschten Position in der Schalung 30 zu fixieren. Beispielsweise kann zur Fixierung 35 der Abstandhaltekörper 32 auch das Verbindungselement 34 verwendet werden. Gegebenenfalls kann sich das Verbindungselement 34 aus dem auszugießenden Hohlraum der Schalung 30 heraus erstrecken und dort zur Positionierung der entsprechenden Gruppe 33 der Abstandhaltekörper 32 fixiert bzw. befestigt werden. Eine derartige Fixierung 35 zur Fixierung eines Verbindungselements 34 ist beispielhaft stark schematisiert in Figur 9 gezeigt.

An den Abstandhaltekörpern 32 wird die Textilbewehrung 21 angeordnet. Bei dem hier beschriebenen Ausführungsbeispiel ist die Textilbewehrung 21 ausgehärtet und mithin formstabil. Sie könnte alternativ zum beschriebenen Verfahren auch ausgehärtet werden, wenn die Form der Textilbewehrung 21 durch das Anordnen auf bzw. an den Abstandhaltekörpern 32 vorgegeben ist.

Mittels einer Spannvorrichtung 40 wird auf die Textilbewehrung 21 in wenigstens eine Zugrichtung Z eine Zugkraft FZ auf die Textilbewehrung 21 ausgeübt. Die Zugkraft FZ wirkt auf einen oder mehrere Textilstränge 23 der Textilbewehrung 21 entlang dessen jeweiliger Erstreckung, wobei die Zugrichtung Z der Verlaufsrichtung bzw. Erstreckungsrichtung des mit der Zugkraft FZ beaufschlagten Textilstranges 23 entspricht. Es können Textilstränge 23 einer oder mehrerer Gruppen mit einer Zugkraft FZ beaufschlagt werden. Zur Erzeugung einer Zugkraft FZ auf einen oder mehrere Textilstränge 23 einer gemeinsamen Gruppe werden die Ende der Textilstränge 23, die einen jeweiligen Endabschnitt der Textilbewehrung 21 bilden, mit jeweils einer Klemmeinheit 41 der Spannvorrichtung 40 klemmend beaufschlagt und gehalten. Über die Klemmeinheiten 41 kann die Spannvorrichtung 40 die Zugkraft FZ auf die Textilbewehrung 21 ausüben.

Wenn die Textilbewehrung 21 mittels der Spannvorrichtung 40 mit einer Zugkraft FZ beaufschlagt wird, können sich die Textilstränge 23 abhängig von der dreidimensionalen Form der Schalung 30 aus ihrer gewünschten Lage quer zur Richtung der Zugkraft FZ verschieben. Dies kann dann auftreten, wenn die unter Zugspannung FZ stehenden Textilstränge nicht durch ausreichend viele quer dazu verlaufende Textilstränge 23 miteinander verbunden sind. Um eine derartige Verschiebung zu verhindern, kann optional eine Fixieranordnung 37 verwendet werden, die die Textilstränge 23 quer zu der jeweils aufgebrachten Zugkraft FZ in ihrer gewünschten Ausrichtung hält. Beispielsweise können die Verbindungsstellen der gitterförmigen Textilbewehrung zusätzlich mittels der Fixieranordnung 37 gesichert werden, beispielsweise durch zusätzliche Umwicklungen mit Fixierfäden und/oder zusätzliche Klebesicherungen. Zusätzlich oder alternativ kann die Fixieranordnung 37 wenigstens einen zusätzlichen Fixier-Textilstrang 38 aufweisen, der mehrere Textilstränge 23 quer zu der Richtung der Zugkraft FZ miteinander verbindet und dadurch zur Lagefixierung zusätzlich zu den vorhandenen quer Zugkraft FZ verlaufenden Textilsträngen 23 beiträgt. Der wenigstens eine Fixier-Textilstrang 38 kann analog zu den Textilsträngen 23 ein Roving mit einer ausgehärteten Kunststoffmatrix aus Epoxidharz oder SBR (Styrol-Butadien-Kautschuk )aufweisen.

In den Figuren 10 und 11 ist beispielhaft veranschaulicht, dass die Spannvorrichtung 40 derart eingerichtet sein kann, dass die Zugkraft FZ in unterschiedliche Zugrichtungen Z auf die Textilbewehrung 21 ausgeübt werden kann. Die Anzahl der Klemmeinheiten 41 kann dabei abhängig von der Anzahl der Textilstränge 32 bzw. der Größe der Textilbewehrung 21 variieren.

Wie es in den Figuren 10 und 11 veranschaulicht ist, wird die Zugkraft FZ auf die Textilstränge 23 der Textilbewehrung 21 ausgeübt, wobei sich die Textilbewehrung 21 nicht innerhalb einer Ebene, sondern gebogen bzw. gekrümmt entsprechend der herzustellenden Form des Baustoff-Bauteils 20 erstreckt. Die Spannvorrichtung 40 befindet sich außerhalb eines mit fließfähigem Baustoff B auszugießenden Schalungsinnenraums 30a der Schalung 30. Der Schalungsinnenraum 30a der Schalung 30 derart geschlossen, dass ein eingefüllter fließfähiger Baustoff nicht aus dem Schalungsinnenraum 30a herausfließen kann. Der Schalungsinnenraum 30a wird durch die Schalungsteile 31 definiert. An den Stellen, an denen die Textilbewehrung 21 aus dem Schalungsinnenraum 30a herausragt, muss dieser gegebenenfalls abgedichtet werden. Die Schalung 30 kann auch derart ausgerichtet werden, dass die offenen Abschnitte des Schalungsinnenraums 30a vertikal nach oben weisen, so dass eingefüllter fließfähiger Baustoff B nicht aus dem Schalungsinnenraum 30a herausfließen kann. Zum Einfüllen des fließfähigen Baustoffs B in den Schalungsinnenraum 30a der Schalung 30 kann beispielsweise wenigstens ein Einfüllkanal 42 verwendet werden, der in den Schalungsinnenraum 30a der Schalung 30 mündet. Der Einfüllkanal 42 kann ein entsprechendes Schalungsteil 31 durchsetzen und nach außen ausmünden, um Baustoff B einfüllen zu können.

Unter Aufrechterhaltung der Zugkraft FZ härtet der Baustoff B in der Schalung 30 aus. Nach dem Aushärten des Baustoffs B kann das Erzeugen der Zugkraft FZ durch die Spannvorrichtung 40 aufgehoben werden und das fertige Baustoff-Bauteil 20 kann aus der Schalung 30 entnommen werden (Ausschalen). Das fertige Baustoff-Bauteil 20 mit der darin eingebetteten Textilbewehrung 21 ist schematisch in Figur 12 veranschaulicht.

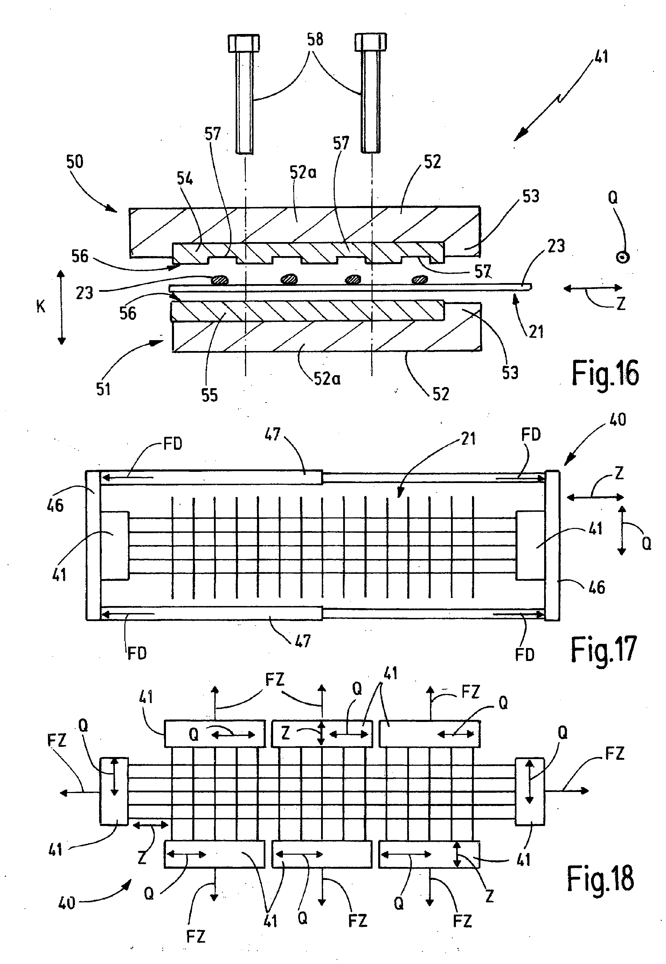

Figur 17 zeigt eine stark vereinfachte schematische Darstellung eines Ausführungsbeispiels einer Spannvorrichtung 40 mit zwei Klemmeinheiten 41. Die beiden Klemmeinheiten 41 beaufschlagen jeweils einen entgegengesetzten Endabschnitt einer Textilbewehrung 21. Jede Klemmeinheit 41 ist an einem Stützteil 46 angeordnet. Zwischen den beiden Stützteilen ist wenigstens eine Krafterzeugungseinrichtung 47 angeordnet, die die beiden Stützteile 46 voneinander weg mit einer der Zugkraft FZ entsprechenden Drückkraft FD beaufschlagt. Die Drückkraft FD drängt die Stützteile 46 und mithin die Klemmeinheiten 41 voneinander weg. Dadurch wird auf die Textilbewehrung 21 eine entsprechende Zugkraft FZ ausgeübt.

Beispielsgemäß ist die Krafterzeugungseinrichtung 47 durch eine in der Länge veränderbare Teleskopeinrichtung gebildet. Vorzugsweise ist zur gleichförmigen Erzeugung der Zugkraft FZ in einer Querrichtung Q, rechtwinkelig zu der Zugrichtung Z auf beiden Seiten der Textilbewehrung 21 jeweils eine Krafterzeugungseinrichtung 47 angeordnet.

Bei der in Figur 17 veranschaulichten Ausführungsform der Spannvorrichtung 40 wird die Zugkraft FZ lediglich in eine Zugrichtung Z erzeugt. Es ist jedoch auch möglich, die Textilbewehrung 21 mit einer Zugkraft FZ in eine Zugrichtung Z und mit einer weiteren Zugkraft FZ in einer weiteren Zugrichtung Z zu beaufschlagen, z.B. in den Richtungen, in denen sich die jeweiligen Textilstränge 23 einer gitterförmigen Textilbewehrung 21 erstrecken. Diese Situation ist beispielhaft schematisch nochmals in Figur 18 dargestellt. Die Krafterzeugung kann dabei zwischen jeweils zwei sich gegenüberliegenden Klemmeinheiten 41 auf die im Zusammenhang mit Figur 17 geschilderte Weise erfolgen. Es ist auch möglich, die Zugkräfte FZ durch irgendeine andere Krafterzeugungseinrichtung zu erzeugen, die mechanisch und/oder elektrisch und/oder hydraulisch und/oder pneumatisch arbeiten kann. Beispielsweise können Hydraulikzylinder, Pneumatikzylinder, Elektromotoren oder dergleichen zur Erzeugung der jeweiligen Zugkraft FZ verwendet werden.

Eine Ausführung der Klemmeinheit 41 zur erfindungsgemäßen Verwendung ist anhand eines Ausführungsbeispiels in Figur 16 schematisch dargestellt. Die Klemmeinheit 41 weist ein erstes Klemmteil 50 sowie ein zweites Klemmteil 51 auf. Jedes der Klemmteile 50, 51 hat ein Trägerteil 52 aus einem harten Material, beispielsweise Stahl. Jedes Trägerteil 52 hat einen Plattenabschnitt 52a. Der Plattenabschnitt 52a ist vorzugsweise quaderförmig ausgeführt. Schräg oder rechtwinklig zum Plattenabschnitt 52a ragt ein Stützvorsprung 53 weg. Der Stützvorsprung 53 erstreckt sich in eine Querrichtung Q rechtwinklig zu der Zugrichtung Z der Zugkraft FZ, die über die Klemmeinheit 41 auf die Textilbewehrung 21 ausgeübt werden soll. Die Querrichtung Q ist in der Abbildung nach Figur 16 senkrecht zur Zeichenebene orientiert.

Das erste Klemmteil 50 hat einen ersten Klemmeinsatzkörper 54 und das zweite Klemmteil 51 hat einen zweiten Klemmeinsatzkörper 55. Die Klemmeinsatzkörper 54, 55 sind aus einem Kunststoffmaterial hergestellt. Das Kunststoffmaterial hat eine Härte im Bereich von 55 Shore-D bis 80 Shore-D, vorzugsweise von 60 Shore-D bis 75 Shore-D weiter vorzugsweise 60 Shore-D bis 70 Shore-D und beispielsweise von etwa 63 Shore-D bis etwa 67 Shore-D. Das Kunststoffmaterial besteht im Ausführungsbeispiel aus einem Polyurethanharz mit wenigstens einem Zusatzstoff. Beispielsweise kann das Polyurethanharz mit einem Isocyanat und/oder einem Füllstoff, wie etwa Quarzsand, und/oder einem Additiv, wie etwa einem silikonfreien Entlüfter, gemischt werden. Bei einem bevorzugten Ausführungsbeispiel beträgt das Mischungsverhältnis etwa 19-21 Gew.% Polyurethanharz, etwa 50-52 Gew.% Isocyanat, etwa 27-29 Gew.% eines aus festen Partikeln bzw. Körnern bestehenden Füllstoffes, beispielsweise Quarzsand, sowie etwa 0,5-1,5 Gew.% eines Entlüfters.

Jeder Klemmeinsatzkörper 54, 55 weist eine Klemmfläche 56 auf, die von dem Trägerteil 52 bzw. dem Plattenteil 52a weg weist. Die beiden Klemmflächen 56 der beiden Klemmeinsatzkörper 54, 55 sind einander zugewandt. Die Klemmflächen 56 erstrecken sich in einer Ebene, die durch die Zugrichtung Z und die Querrichtung Q aufgespannt ist.

Die Klemmfläche 56 des zweiten Klemmeinsatzkörpers 55 ist abgesehen von ihrer Rauheit eben ausgestaltet. Die Klemmfläche 56 des ersten Klemmeinsatzkörpers 54 ist durch mehrere sich in Querrichtung Q erstreckende Nuten oder Rillen 57 in mehrere Abschnitte unterteilt, die beim Ausführungsbeispiel vollständig voneinander getrennt sind. Die Rillen 57 können jeweils einen Textilstrang 23 zugeordnet sein, der sich in Querrichtung Q in dem Endabschnitt der Textilbewehrung 21 erstreckt, die zwischen den beiden Klemmflächen 56 eingeklemmt werden soll. Dadurch wird erreicht, dass die sich in Zugrichtung Z in dem zu klemmenden Endabschnitt der Textilbewehrung 21 erstreckenden Textilstränge 23 ausreichend gut zwischen den sich gegenüberliegenden Klemmflächen 56 klemmend beaufschlagt werden können.

Die Klemmeinsatzkörper 54, 55 stützen sich in Zugrichtung Z am jeweiligen Stützvorsprung 53 ab. Sie werden beim Aufbringen der Zugkraft FZ in Zugrichtung Z durch die Stützvorsprünge 53 abgestützt. Zwei in Zugrichtung Z auf entgegengesetzten Seiten der Textilbewehrung 21 angeordnete Klemmeinheiten 41 haben ihre Stützvorsprünge 53 auf den einander zugewandten Seiten.

Zur Erzeugung einer Klemmkraft zwischen den beiden Klemmteilen 50, 51 kann beispielsweise eine Schraubverbindung mit wenigstens einer und vorzugsweise mehreren Schrauben 58 verwendet werden. Mittels der Schrauben 58 können die beiden Klemmteile 50, 51 gegeneinander verschraubt werden, so dass in einer Klemmrichtung K, rechtwinklig zur Erstreckungsrichtung der Klemmflächen 56, eine Klemmkraft auf einen Endabschnitt der Textilbewehrung 21 ausgeübt wird, der sich zwischen den beiden Klemmflächen 56 befindet. Die Klemmrichtung K ist rechtwinklig zur Querrichtung Q und zur Zugrichtung Z orientiert.

Durch die definierte Härte des Kunststoffmaterials kann eine sehr gleichmäßige Zugkraft in Zugrichtung Z erzeugt werden. Die sich in Zugrichtung Z erstreckenden Textilstränge 23 haben die Möglichkeit, bei einer definierten Klemmkraft relativ zu den Klemmflächen 56 zu gleiten, bis die Zugkraft FZ einem durch die Klemmkraft vorgegebenen Wert entspricht. Wenn einzelne Textilstränge 23 mit einer zu großen Zugkraft FZ beaufschlagt sind, können diese sich relativ zu den Klemmkörpereinsätzen 54, 55 in Zugrichtung Z bewegen, bis die Zugkraft FZ einem vorgegebenen Wert entspricht. Aufgrund des verwendeten Kunststoffmaterials mit definierter Härte werden die Textilstränge 23 in dem geklemmten Endabschnitt nicht beschädigt und die Zugkraft FZ kann während des Aushärtens des Betons mit dem definierten, gewünschten Betrag aufrechterhalten werden. Mittels der erfindungsgemäßen Klemmeinheit 41 lässt sich daher eine gleichmäßige, sehr genau einstellbare Zugkraft FZ auf die Textilstränge 23 der Textilbewehrung 21 erzeugen.

### Bezugszeichenliste:

- 20: Baustoff-Bauteil
- 20a: eine Seite des Baustoff-Bauteils
- 20b: andere Seite des Baustoff-Bauteils
- 20c: ein Ende des Baustoff-Bauteils
- 20d: anderes Ende des Baustoff-Bauteils
- 21: Textilbewehrung
- 22: Modell
- 23: Textilstrang
- 24: Roving
- 25: Formteil

- 30: Schalung
- 30a: Schalungsinnenraum der Schalung
- 31: Schalungsteil
- 32: Abstandhaltekörper
- 32a: Unterseite des Abstandhaltekörpers
- 32b: Oberseite des Abstandhaltekörpers
- 33: Gruppe
- 34: Verbindungselement
- 35: Fixierung
- 36: Rinne
- 37: Fixieranordnung
- 38: Fixier-Textilstrang

- 40: Spannvorrichtung
- 41: Klemmeinheit
- 42: Einfüllkanal

- 46: Stützteil
- 47: Krafterzeugungseinrichtung
- 50: erstes Klemmteil
- 51: zweites Klemmteil
- 52: Trägerteil
- 52a: Plattenabschnitt des Trägerteils
- 53: Stützvorsprung
- 54: erster Klemmeinsatzkörper
- 55: zweiter Klemmeinsatzkörper
- 56: Klemmfläche
- 57: Rille
- 58: Schraube

- B: Baustoff
- FD: Drückkraft
- FZ: Zugkraft
- K: Klemmrichtung
- Q: Querrichtung
- Z: Zugrichtung

## Patentansprüche

1. Verfahren zur Herstellung eines mit einer Textilbewehrung (21) versehenen Baustoff-Bauteils (20), das eine dreidimensionale Gestalt aufweist, die in eine oder mehrere Raumrichtungen konkav oder konvex gekrümmt ist, mit folgenden Schritten;
- Bereitstellen einer Schalung (30) mit wenigstens einem Schalungsteil (31) zur Herstellung des Baustoff-Bauteils (20),
- Einlegen von Abstandhaltekörpern (32) in die Schalung (30),
- Anordnen der aus wenigstens einem Textilstrang (23) hergestellten Textilbewehrung (21) auf den Abstandhaltekörpern (32),
- Aufbringen einer Zugkraft (FZ) auf die Textilbewehrung (21) mittels einer Spannvorrichtung (40), die sich außerhalb der Schalung (30) befindet, wobei sich die mit der Zugkraft (FZ) vorgespannte Textilbewehrung (21) nicht parallel zu einer Ebene erstreckt,
- Gießen von fließfähigem Baustoff (B) in die Schalung (30) um die Textilbewehrung (21) und Aushärten des Baustoffs (B),
- Entnehmen des ausgehärteten Baustoff-Bauteils (20) aus der Schalung (30).

2. Verfahren nach Anspruch 1,
**dadurch gekennzeichnet, dass** die Abstandhaltekörper (32) mit einer Unterseite (32a) an einem Schalungsteil (31) angeordnet werden.

3. Verfahren nach Anspruch 1 oder 2,
**dadurch gekennzeichnet, dass** die Abstandhaltekörper (32) eine Oberseite (32b) aufweisen, die in wenigstens eine Richtung konvex gekrümmt ist.

4. Verfahren nach Anspruch 3,
**dadurch gekennzeichnet, dass** die Krümmungsrichtung der konvex gekrümmten Oberseite (32b) der Erstreckungsrichtung des mit der Zugkraft beaufschlagten wenigstens einen Textilstrangs (23) der Textilbewehrung (21) entspricht.

5. Verfahren nach einem der vorhergehenden Ansprüche, **dadurch gekennzeichnet, dass** die Abstandhaltekörper (32) in den Baustoff (B) des Baustoff-Bauteils (20) eingegossen werden.

6. Verfahren nach einem der vorhergehenden Ansprüche, **dadurch gekennzeichnet, dass** die Abstandhaltekörper (32) mehrere Gruppen (33) bilden und die Abstandhaltekörper (32) einer gemeinsamen Gruppe (33) mit einem biegbaren oder flexiblen Verbindungselement (34) miteinander verbunden sind.

7. Verfahren nach einem der vorhergehenden Ansprüche, **dadurch gekennzeichnet, dass** zumindest zwei der vorhandenen Abstandhaltekörper (32) unterschiedlich dimensioniert sind.

8. Verfahren nach einem der vorhergehenden Ansprüche, **dadurch gekennzeichnet, dass** die Zusammensetzung des Baustoffs der Abstandhaltekörper (32) der Zusammensetzung des Baustoffs des herzustellenden Baustoff-Bauteils (20) entspricht.

9. Verfahren nach einem der vorhergehenden Ansprüche, **dadurch gekennzeichnet, dass** die Textilbewehrung (21) dadurch hergestellt wird, dass mehrere Rovings (24) mit Harz getränkt und ausgehärtet werden.

10. Verfahren nach Anspruch 9,
**dadurch gekennzeichnet, dass** die Textilbewehrung (21) in einer Gestalt ausgehärtet wird, in der die Textilbewehrung (21) in das Baustoff-Bauteil (20) eingegossen wird.

11. Verfahren nach Anspruch 9 oder 10,
**dadurch gekennzeichnet, dass** die vorgeformte und ausgehärtete Textilbewehrung (21) auf den Abstandhaltekörpern (32) angeordnet und mit der Zugkraft (FZ) beaufschlagt wird.

12. Verfahren nach Anspruch 9 oder 10,
**dadurch gekennzeichnet, dass** die noch nicht ausgehärtete Textilbewehrung (21) auf den Abstandhaltekörpern (32) angeordnet, in die gewünschte Gestalt gebracht und anschließend ausgehärtet und mit der Zugkraft (FZ) beaufschlagt wird.

13. Verfahren nach einem der vorhergehenden Ansprüche,
**dadurch gekennzeichnet, dass** die Textilbewehrung (21) gitterförmig hergestellt ist.

14. Verfahren nach einem der vorhergehenden Ansprüche,
**dadurch gekennzeichnet, dass** die Zugkraft (FZ) in eine oder mehrere Zugrichtungen (Z) aufgebracht wird.

15. Verwendung einer Spannvorrichtung (40) zur Erzeugung einer Zugkraft (FZ) in einer Zugrichtung (Z) auf eine Textilbewehrung (21) mit mehreren Textilsträngen (23) bei der Herstellung eines Baustoff-Bauteils (20) gemäß einem Verfahren nach einem der vorhergehenden Ansprüche, wobei die Spannvorrichtung (40) aufweist:
wenigstens eine Klemmeinheit (41), die zum Klemmen eines Endabschnitts der Textilbewehrung (21) eingerichtet ist,
wobei die Klemmeinheit (41) zwei Klemmteile (50, 51) aufweist, die jeweils einen Klemmeinsatzkörper (54, 55) aufweisen,
wobei jeder Klemmeinsatzkörper (54, 55) eine Klemmfläche (56) aufweist, die dazu eingerichtet ist, am Endabschnitt einer eingeklemmten Textilbewehrung (21) anzuliegen,
wobei die Klemmeinsatzkörper (54, 55) aus einem Kunststoffmaterial bestehen, das eine Härte im Bereich von 55 Shore-D bis 80 Shore-D aufweist.

16. Verwendung nach Anspruch 15,
**dadurch gekennzeichnet, dass** zumindest einer der Klemmeinsatzkörper (54) eine unebene Klemmfläche (56) aufweist.

17. Verwendung nach Anspruch 16,
**dadurch gekennzeichnet, dass** die wenigstens eine unebene Klemmfläche (56) Rillen (57) aufweist, die sich in einer Querrichtung (Q) quer zur Zugrichtung (Z) erstrecken.

18. Verwendung nach einem der Ansprüche 15 bis 17,
**dadurch gekennzeichnet, dass** jedes Klemmteil (50, 51) einen sich in einer Querrichtung (Q) quer zur Zugrichtung (Z) erstreckenden Stützvorsprung (53) für den Klemmeinsatzkörper (54, 55) aufweist.

19. Verwendung nach einem der Ansprüche 15 bis 18,
**dadurch gekennzeichnet, dass** das KunstStoffmaterial der Klemmeinsatzkörper (54, 55) ein Polyurethanharz mit wenigstens einem Zusatzstoff aufweist.

20. Verwendung nach Anspruch 19,
**dadurch gekennzeichnet, dass** der wenigstens eine Zusatzstoff ein Füllstoff und/oder ein Isocyanat und/oder ein Entlüfter ist.

## Claims

1. A method for producing a construction material component (20) that has a three-dimensional shape being curved in a concave or convex manner in one or more spatial directions and that is provided with a textile reinforcement (21), said method comprising the following steps;
- providing a formwork (30) having at least one formwork part (31) for producing the construction material component (20),
- placing spacers (32) in the formwork (30),
- arranging the textile reinforcement (21) produced from at least one textile strand (23) on the spacers (32),
- applying a tensile force (FZ) to the textile reinforcement (21) by means of a tensioning device (40), which is located outside the formwork (30), wherein the textile reinforcement (21) prestressed by the tensile force (FZ) does not extend parallel to a plane,
- pouring flowable construction material (B) into the formwork (30) around the textile reinforcement (21) and hardening the construction material (B),
- removing the hardened construction material component (20) from the formwork (30).

2. The method according to claim 1,
**characterised in that** the spacers (32) are arranged by means of an underside (32a) on a formwork part (31).

3. The method according to claim 1 or 2, **characterised in that** the spacers (32) have an upper side (32b), which is curved in a convex manner in at least one direction.

4. The method according to claim 3,
**characterised in that** the direction of curvature of the convexly curved upper side (32b) corresponds to the direction of extent of the at least one textile strand (23) of the textile reinforcement acted on by tensile force (FZ).

5. The method according to any one of the preceding claims,
**characterised in that** the spacers (32) are cast into the construction material (B) of the construction material component (20).

6. The method according to any one of the preceding claims,
**characterised in that** the spacers (32) form a plurality of groups (33) and the spacers (32) within the same group (33) are connected to one another by means of a pliable or flexible connection element (34).

7. The method according to any one of the preceding claims,
**characterised in that** at least two of the provided spacers (32) are dimensioned differently.

8. The method according to any one of the preceding claims,
**characterised in that** the composition of the construction material of the spacers (32) corresponds to the composition of the construction material of the construction material component (20) to be produced.

9. The method according to any one of the preceding claims,
**characterised in that** the textile reinforcement (21) is produced **in that** a plurality of rovings (24) are saturated with resin and hardened.

10. The method according to claim 9,
**characterised in that** the textile reinforcement (21) is hardened in a shape in which the textile reinforcement (21) is cast into the construction material component (20).

11. The method according to claim 9 or 10, **characterised in that** the preformed and hardened textile reinforcement (21) is arranged on the spacers (32) and is loaded with the tensile force (FZ).

12. The method according to claim 9 or 10, **characterised in that** the textile reinforcement (21), which is not yet hardened, is arranged on the spacers (32), is brought into the desired shaping, and is then hardened and loaded with the tensile force (FZ).

13. The method according to any one of the preceding claims,
**characterised in that** the textile reinforcement (21) is produced in a lattice-like manner.

14. The method according to any one of the preceding claims,
**characterised in that** the tensile force (FZ) is applied in one or more tension directions (Z).

15. Use of a tensioning device (40) for generating a tensile force (FZ) in a tension direction (Z) on a textile reinforcement (21) having a plurality of textile strands (23) in the production of a construction material component (20) according to a method according to one of the preceding claims, wherein the tensioning device (40) comprises:
at least one clamping unit (41), which is designed to clamp an end portion of the textile reinforcement (21),
wherein the clamping unit (41) has two clamping parts (50, 51), which each have a clamping insert body (54, 55),
wherein each clamping insert body (54, 55) has a clamping surface (56), which is designed to bear against the end portion of a clamped textile reinforcement (21),
wherein the clamping insert bodies (54, 55) consist of a plastics material that has a hardness in the range of from 55 Shore D to 80 Shore D.

16. The use according to claim 15,
**characterised in that** at least one of the clamping insert bodies (54) has an uneven clamping surface (56).

17. The use according to claim 16,
**characterised in that** the at least one uneven clamping surface (56) has grooves (57), which extend in a transverse direction (Q) transversely to the tension direction (Z).

18. The use according to any one of claims 15 to 17, **characterised in that** each clamping part (50, 51) has a supporting protrusion (53) for the clamping insert body (54, 55), said protrusion extending in a transverse direction (Q) transversely to the tension direction (Z).

19. The use according to any one of claims 15 to 18, **characterised in that** the plastics material of the clamping insert bodies (54, 55) comprises a polyurethane resin with at least one additive.

20. The use according to claim 19,
**characterised in that** the at least one additional material is a filler and/or an isocyanate and/or a deaerator.

## Revendications

1. Procédé de fabrication d'un élément en matériau de construction (20) doté d'une armature textile (21) et présentant une forme tridimensionnelle qui est incurvée de manière concave ou convexe dans une ou plusieurs directions spatiales, comprenant les étapes suivantes :
- préparation d'un coffrage (30) comprenant au moins un élément de coffrage (31) pour la fabrication de l'élément en matériau de construction (20),
- mise en place de corps d'espacement (32) dans le coffrage (30),
- installation de l'armature textile (21), réalisée à partir d'au moins un boyau textile (23), sur les corps d'espacement (32),
- application d'une force de traction (FZ) à l'armature textile (21), au moyen d'un dispositif de tension (40) qui se trouve à l'extérieur du coffrage (30), sachant que l'armature textile (21), qui est mise sous précontrainte par la force de traction (FZ), ne s'étend pas parallèlement à un plan,
- coulée d'un matériau de construction (B) fluide dans le coffrage (30), autour de l'armature textile (21), et durcissement du matériau de construction (20),
- retrait de l'élément en matériau de construction (20) durci du coffrage (30).

2. Procédé selon la revendication 1, **caractérisé en ce que** les corps d'espacement (32) sont disposés avec une face inférieure (32a) sur un élément de coffrage (31).

3. Procédé selon la revendication 1 ou 2, **caractérisé en ce que** les corps d'espacement (32) présentent une face supérieure (32b) qui est incurvée sous une forme convexe au moins dans une direction.

4. Procédé selon la revendication 3, **caractérisé en ce que** la direction de courbure de la face supérieure (32b) incurvée sous une forme convexe correspond à la direction dans laquelle s'étend le boyau textile (23), au nombre d'au moins un, de l'armature textile (21) auquel est appliquée la force de traction.

5. Procédé selon l'une des revendications précédentes, **caractérisé en ce que** les corps d'espacement (32) sont coulés dans le matériau de construction (B) de l'élément en matériau de construction (20).

6. Procédé selon l'une des revendications précédentes, **caractérisé en ce que** les corps d'espacement (32) forment plusieurs groupes (33) et que les corps d'espacement (32) d'un même groupe (33) sont reliés entre eux par un élément de liaison (34) flexible ou pouvant être cintré.

7. Procédé selon l'une des revendications précédentes, **caractérisé en ce qu'**au moins deux des corps d'espacement (32) présents ont des dimensions différentes.

8. Procédé selon l'une des revendications précédentes, **caractérisé en ce que** la composition du matériau de construction des corps d'espacement (32) correspond à la composition du matériau de l'élément en matériau de construction (20) à fabriquer.

9. Procédé selon l'une des revendications précédentes, **caractérisé en ce que** l'armature textile (21) est réalisée par le fait que plusieurs rovings (24) sont imprégnés de résine et durcis.

10. Procédé selon la revendication 9, **caractérisé en ce que** l'armature textile (21) est durcie dans une structure dans laquelle l'armature textile (21) est coulée dans l'élément en matériau de construction (20).

11. Procédé selon la revendication 9 ou 10, **caractérisé en ce que** l'armature textile (21) préformée et durcie est disposée sur les corps d'espacement (32) et est soumise à la force de traction (FZ).

12. Procédé selon la revendication 9 ou 10, **caractérisé en ce que** l'armature textile (21) pas encore durcie est placée sur les corps d'espacement (32), reçoit la forme souhaitée et est ensuite durcie et soumise à la force de traction (FZ).

13. Procédé selon l'une des revendications précédentes, **caractérisé en ce que** l'armature textile (21) est réalisée sous forme de grille.

14. Procédé selon l'une des revendications précédentes, **caractérisé en ce que** la force de traction (FZ) est appliquée dans une ou plusieurs directions de traction (Z).

15. Utilisation d'un dispositif de tension (40) pour produire une force de traction (FZ), dans une direction de traction (Z), sur une armature textile (21) comportant plusieurs boyaux textiles (23), lors de la fabrication d'un élément en matériau de construction (20) selon un procédé conforme à l'une des revendications précédentes, le dispositif de tension (40) présentant :
au moins une unité de serrage (41) qui est conçue pour le serrage d'une partie d'extrémité de l'armature textile (21),
l'unité de serrage (41) présentant deux éléments de serrage (50, 51) qui comportent chacun un corps formant insert de serrage (54, 55),
chaque corps formant insert de serrage (54, 55) présentant une surface de serrage (56) qui est conçue pour être appliquée contre la partie d'extrémité d'une armature textile (21) serrée,
les corps formant inserts de serrage (54, 55) étant constitués d'un matériau synthétique qui présente une dureté comprise dans la plage allant de 55 Shore D à 80 Shore D.

16. Utilisation selon la revendication 15, **caractérisée en ce qu'**au moins un des corps formant inserts de serrage (54) présente une surface de serrage non plane (56).

17. Utilisation selon la revendication 16, **caractérisée en ce que** la surface de serrage non plane (56), au nombre d'au moins une, présente des rainures (57) qui s'étendant dans une direction transversale (Q) perpendiculaire à la direction de traction (Z).

18. Utilisation selon l'une des revendications 15 à 17, **caractérisée en ce que** chaque élément de serrage (50, 51) présente une saillie d'appui (53) pour le corps formant insert de serrage (54, 55), qui s'étend dans une direction transversale (Q) perpendiculaire à la direction de traction (Z).

19. Utilisation selon l'une des revendications 15 à 18, **caractérisée en ce que** la matière synthétique des corps formant inserts de serrage (54, 55) présente une résine polyuréthane avec au moins un adjuvant.

20. Utilisation selon la revendication 19, **caractérisée en ce que** l'adjuvant, au nombre d'au moins un, est une charge et/ou un isocyanate et/ou un agent de désaération.
